# EUROPÄISCHE PATENTSCHRIFT

(11) **EP 2 812 635 B1**
(45) Veröffentlichungstag und Bekanntmachung des Hinweises auf die Patenterteilung: **15.05.2019**
(21) Anmeldenummer: 13701423.9
(22) Anmeldetag: 22.01.2013
(51) Int. Cl.: F23Q 7/00

(54) **DRUCKMESSGLÜHKERZE**
PRESSURE MEASURING GLOW PLUG
BOUGIE DE PRÉCHAUFFAGE À MESURE DE PRESSION

(30) Priorität: 10.02.2012 DE 102012202061
(43) Veröffentlichungstag der Anmeldung: 17.12.2014
(73) Patentinhaber: Robert Bosch GmbH, 70442 Stuttgart (DE)
(72) Erfinder: SCHOLZEN, Holger, 70439 Stuttgart (DE); KOETZLE, Wolfgang, 71139 Ehningen (DE); WOLFF, Janpeter, 75449 Wurmberg (DE)
(86) Internationale Anmeldenummer: PCT/EP2013/051067
(87) Internationale Veröffentlichungsnummer: WO 2013/117417

(56) Entgegenhaltungen:
- DE-A1-102008 041 712

## Beschreibung

Die Erfindung betrifft eine Druckmessglühkerze zum Einsetzen in einen Zylinderkopf einer Brennkraftmaschine mit den Merkmalen des Oberbegriffs des Anspruchs 1.

### Stand der Technik

Eine derartige Druckmessglühkerze ist aus DE 102006008351 A1 bekannt, bei der in einem Gehäuse ein Glühstift zum Zünden eines Verbrennungsgemisches einer Brennkraftmaschine und eine Druckmesseinheit mit einem Drucksensor zur Erfassung eines Brennraumdrucks der Brennkraftmaschine angeordnet sind. Der Glühstift ist dem Brennraumdruck ausgesetzt ist und überträgt als Druckaufnehmer den Brennraumdruck auf den Drucksensor, wobei der Drucksensor zwischen dem als Druckaufnehmer wirkenden Glühstift und einem Stützelement mit einer Federkraft einer biegeelastischen Membran mittels einer Spannhülse vorgespannt ist. Die Spannhülse ist dabei mit dem Gehäuse verbunden. Der Glühstift weist einen Glühstromkontakt für ein im Glühstift untergebrachtes elektrisches Heizelement auf, wobei der Glühstromkontakt mit einer Glühstromleitung kontaktiert ist. Die Glühstromleitung ist dabei durch den Drucksensor hindurch zu einen Anschlusskontakt am Gehäuse geführt. Weiterer Stand der Technik ist aus der DE 102008041712 bekannt.

### Offenbarung der Erfindung

Die Erfindung mit den kennzeichnenden Merkmalen des Anspruchs 1 hat den Vorteil, dass die Glühstromleitung außerhalb des Drucksensors geführt wird. Dadurch bleibt der Drucksensor unbeeinflusst von der Kontaktierung des Glühstifts.

Vorteilhafte Weiterbildungen der Erfindung sind durch die Maßnahmen der Unteransprüche möglich.

Dadurch, dass das hülsenförmige Druckübertragungselement eine radiale Aussparung aufweist, wird genügend Freiraum zum seitlichen Herausführen der Glühstromleitung aus dem Aufnahmeraum und zur Weiterführung der Glühstromleitung innerhalb der Druckmesseinheit geschaffen, wobei die Glühstromleitung mit einem außerhalb der Druckmesseinheit freiliegenden Hochstromkontakt kontaktiert wird. Dazu wird die Glühstromleitung in axialer Richtung innerhalb der Druckmesseinheit am Drucksensor vorbeigeführt und durch eine in einem Stützelement für den Drucksensor eingebrachte Durchführung hindurchgeführt, um schließlich außerhalb der Druckmesseinrichtung mit dem freiliegenden Hochstromkontakt kontaktiert zu werden. Der freiliegende Hochstromkontakt ist zweckmäßigerweise an einer glühmodulseitigen Stirnseite einer Kontaktiereinheit ausgebildet.

Eine zweckmäßiger Ausführung der Druckmessglühkerze liegt vor, wenn der Drucksensor mit der Federkraft einer biegeelastischen Membran vorgespannt ist, wobei die biegeelastische Membran mittels einer Spannhülse mit einem Stützelement, an dem sich der Drucksensor zumindest mittelbar abstützt, verbunden ist. Die Spannhülse weist dabei einen Außendurchmesser D2 auf, der geringer ist als der Außendurchmesser D1 eines äußeren Stützabschnitts, so dass sich zwischen einem Innendurchmessers d1 des Gehäuses und dem Außendurchmesser D2 der Spannhülse ein umlaufender Spalt ergibt. Dadurch wird Reibung zwischen der Spannhülse und dem Gehäuse vermieden, welche die Genauigkeit der Druckmessung beeinflussen würde. Dadurch wird außerdem ein Glüh- und Druckmessmodul geschaffen, bei dem die mechanische Vorspannung für den Drucksensor außerhalb des Gehäuses einstellbar ist, wodurch die mechanische Vorspannung des Drucksensors in den späteren Montageschritten beim Zusammenbau der Druckmessglühkerze nicht beeinflusst wird.

### Ausführungsbeispiel

Ein Ausführungsbeispiel der Erfindung ist in der Zeichnung dargestellt und in der nachfolgenden Beschreibung näher erläutert.

Es zeigen:
- Figur 1: eine Schnittdarstellung durch eine erfindungsgemäße Druckmessglühkerze,
- Figur 2: eine vergrößerte Schnittdarstellung durch ein Glüh- und Druckmessmodul der erfindungsgemäßen Druckmessglühkerze in Figur 1,

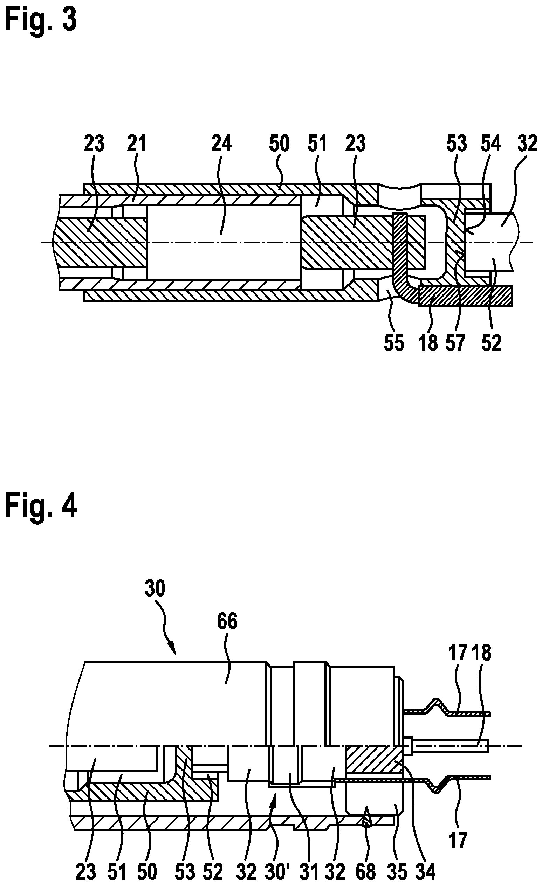

- Figur 3: einen Ausschnitt X in Figur 2 und
- Figur 4: eine Teilschnittdarstellung eines stützelementseitigen Endabschnitts einer Druckmesseinheit gemäß Figur 2.

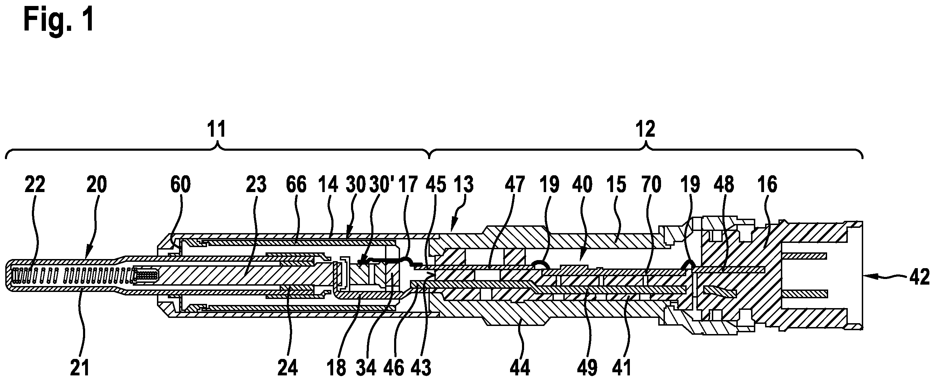

Die in Figur 1 dargestellte Druckmessglühkerze vereint eine konventionelle Glühkerze zum Einsatz in selbstzündenden Brennkraftmaschinen mit einer zusätzlichen Druckmessfunktion einer Druckmesseinrichtung zur Erfassung eines Brennraumdrucks der Brennkraftmaschine. Die Druckmessglühkerze umfasst im Wesentlichen ein Glüh- und Druckmessmodul 11 und ein Elektronikmodul 12, die zumindest zum Teil in einem beispielsweise mehrteiligen Gehäuse 13 aufgenommen sind. Das Gehäuse 13 umfasst mehrere Gehäuseteile, wie ein Glühmodulgehäuse 14, ein Elektronikmodulgehäuse 15 und ein Steckergehäuse 16 für eine elektrische Steckerverbindung 42 zur Kontaktierung eines nicht dargestellten Anschlusssteckers.

Das Glüh- und Druckmessmodul 11 beinhaltet die eigentlichen Bauteile einer Glühkerze 20 zum Zünden der Brennkraftmaschine und einer Druckmesseinheit 30 zur Brennraumdruckmessung. Das Glüh- Druckmessmodul 11 umfasst einen aus dem Glühmodulgehäuse 14 brennraumseitig hervorstehenden Glühstift 21, welcher mit dem hervorstehenden Teil in den Brennraum der Brennkraftmaschine ragt und dadurch einen Druckaufnehmer für den im Brennraum herrschenden Druck bildet. Der Glühstift 21 ist im vorliegenden Ausführungsbeispiel ein metallisches Glührohr, in dem ein elektrisches Heizelement 22, beispielsweise in Form einer Heizwendel angeordnet ist, wobei das Heizelement 22 zur Ausbildung eines Pols mit dem Glührohr und zur Ausbildung des anderen Pols mit einem Glühstromkontakt 23 verbunden ist. Der Glühstromkontakt 23 ist an einer brennraumabgewandten Stirnseite des Glühstifts 21 freiliegend in Form eines Anschlussbolzens aus dem Glühstift 21 herausgeführt. Zwischen Glührohr und Glühstromkontakt 23 ist ferner ein elektrisch isolierendes Dichtelement 24 angeordnet. Es ist aber auch denkbar, den Glühstift 21 als keramisches Heizelement auszuführen.

Das Elektronikmodul 12 weist eine Kontaktiereinheit 40 auf, welche einen Träger 41 zur Aufnahme einer Signalverarbeitungseinheit 70, beispielsweise eines ASIC, und das Steckergehäuse 16 umfasst. Der Träger 41 und das Steckergehäuse 16 sind aus einem elektrisch isolierenden Material, beispielweise aus einem Kunststoff ausgeführt, wobei der Träger 41 in einer axialen Längserstreckung an das Steckergehäuse 16 angeformt ist. Dadurch erstreckt sich die Kontaktiereinheit 40 in axialer Längserstreckung der Druckmessglühkerze.

Die Kontaktiereinheit 40 weist an einer glühmodulseitigen Stirnseite 43 des Trägers 41 eine Schnittstelle zur Kontaktierung des Glüh- und Druckmessmoduls 11 auf. Die Schnittstelle wird von an der glühmodulseitigen Stirnseite 43 ausgebildeten, freiliegenden glühmodulseitigen Sensorkontakte 45 zur Kontaktierung des Drucksensors 31 und vom einem freiliegenden, glühmodulseitigen Hochstromkontakt 46 zur Kontaktierung des Glühstromkontakts 23 gebildet, wobei die Kontaktierung des Drucksensors 31 über Sensorleitungen 17 und die Kontaktierung des Glühstromkontakts 23 über eine Glühstromleitung 18 erfolgt.

In den Träger 41 und in das Steckergehäuse 16 sind weiterhin sensorseitige Anschlussleitungen 47 und steckerseitige Anschlussleitungen 48 integriert. Mit einem radialen Abstand von den sensorseitigen und steckerseitigen Anschlussleitungen 47, 48 versehen verläuft axial durch die Kontaktiereinheit 40 weiterhin eine Hochstromleitung 49, die sensorseitig zu dem freiliegenden Hochstromkontakt 46 führt. Steckerseitig führt die Hochstromleitung 49 weiter durch das Steckergehäuse 16 hindurch zu einem Hochstromanschluss für den Glühstrom der Glühkerze 20 an der Steckerverbindung 42. Die sensorseitige und steckerseitige Anschlussleitungen 47, 48 und/oder die Hochstromleitung 49 sind zweckmäßigerweise in den Träger 41 und in das Steckergehäuse 16 eingegossen. Zweckmäßigerweise werden die an der glühmodulseitigen Stirnseite 43 vorhandene Sensorkontakte 45 von den in den Träger 41 integrierten sensorseitigen Anschlussleitungen 47 gebildet. Dementsprechend ist der an der sensorseitigen Stirnseite 43 ebenfalls vorhandene Hochstromkontakt 46 von der in den Träger 41 integrierten Hochstromleitung 49 gebildet.

Die Anschlüsse der Signalverarbeitungseinheit 70 sind mittels elektrischer Verbindungen 19 jeweils mit den sensorseitigen Anschlussleitungen 47 und den steckerseitigen Anschlussleitungen 48 kontaktiert.

Die Kontaktiereinheit 40 ist weiterhin zumindest teilweise von dem rohrförmigen Elektronikmodulgehäuse 15 umgeben, wobei der Träger 41 vollständig und das Steckergehäuse 16 teilweise vom Elektronikmodulgehäuse 15 umgeben ist. Am Elektronikmodulgehäuse 15 ist ein Außengewinde 44 zum Einschrauben in einen Zylinderkopf der Brennkraftmaschine vorhanden. Das Elektronikmodulgehäuse 15 kann dabei einstückig oder mehrstückig ausgeführt sein.

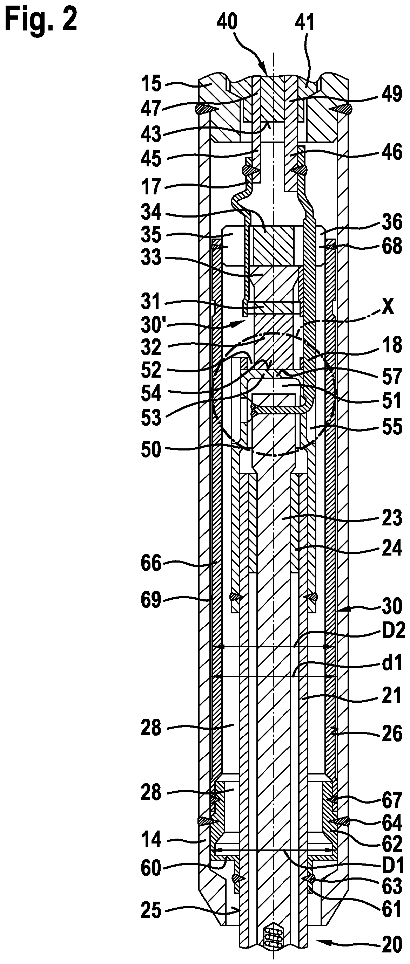

Die Druckmesseinheit 30 ist innerhalb des Glühmodulgehäuses 14 untergebracht, wobei das Glühmodulgehäuse 14 zur Aufnahme der Druckmesseinheit 20 einen Innendruchmesser d1 aufweist. Die Druckmesseinheit 30 umfasst gemäß Figur 2 eine Sensoreinheit 30', eine biegeelastische Membran 60, eine Spannhülse 66 und ein hülsenförmiges Übertragungselement 50.

Die Sensoreinheit 30' weist einen piezoelektrischen Drucksensor 31, ein glühstiftseitiges Druckstück 32, ein stützelementseitiges Druckstück 33 und ein Stützelement 34 auf, wobei der Drucksensor 31 zwischen dem glühstiftseitigen Druckstück 32 und dem stützelementseitigen Druckstück 33 positioniert ist und sich mittels des stützelementseitigen Druckstücks 33 am Stützelement 34 abstützt. Das Stützelement 34 weist erste Aussparungen 35 zur Durchführung der Sensorleitungen 17 und eine zweite Aussparung 36 zur Durchführung der Glühstromleitung 18 auf.

Das hülsenförmige Übertragungselement 50 ist um eine vom Brennraum abgewandte Öffnung des Glühstiftes 21 angeordnet und mit dem Glühstift 21 fest verbunden. Das hülsenförmige Übertragungselement 50 weist glühstiftseitig einen hohlzylinderförmigen Aufnahmeraum 51 und sensorseitig eine Druckstückaufnahme 52 auf. Zwischen dem hohlzylinderförmigen Aufnahmeraum 51 und der sensorseitigen Druckstückaufnahme 51 ist eine stabile Trennwand 53 mit einer sensorseitigen Stützfläche 54 ausgebildet. In den Aufnahmeraum 51 ragt der Hochstromkontakt 23 mit seinem vom Brennraum abgewandten Ende hinein. Innerhalb des Aufnahmeraums 51 ist der Glühstromkontakt 23 mit der Glühstromleitung 18 elektrisch verbunden. In der Druckstückaufnahme 52 ist das glühstiftseitige Druckstück 32 aufgenommen, derart, dass es mit einer glühstiftseitigen Druckaufnahmefläche 57 auf der Stützfläche 54 spaltfrei anliegt.

In der Zylinderwand des hülsenförmigen Übertragungselements 50 ist mindestens ein radialer Durchbruch 55 vorhanden, durch den die Glühstromleitung 18 seitlich nach außen geführt ist. Nach der seitlichen Führung weist die Glühstromleitung 18 im Wesentlichen eine 90 Grad-Biegung auf, so dass die Glühstromleitung 18 in Richtung des Hochstromkontakts 46 in Längserstreckung der Druckmesseinheit 30 im Wesentlichen axial weitergeführt wird. In axialer Richtung wird die Glühstromleitung 18 zwischen der Sensoreinheit 30' und der Spannhülse 66 am Drucksensor 31 vorbeigeführt und durch die im Stützelement 34 eingebrachte Durchführung 36 hindurchgeführt und danach schließlich mit dem Hochstromkontakt 46 der Kontaktiereinheit 40 kontaktiert. Dadurch verläuft die Glühstromleitung 18 nach der 90 Grad-Biegung zwischen der Sensoreinheit 30' und der Spannhülse 66 in axialer Richtung außen vorbei am sensorseitigen Abschnitt des hülsenförmigen Übertragungselements 50, am glühstiftseitigen Druckstück 32, am Drucksensor 31 und am stützelementseitigen Druckstück 33 und durch die Aussparung 36 des Stützelements 34 hindurch bis zum Hochstromkontakt 46.

Mittels der biegeelastischen Membran 60 wird der als Druckaufnehmer dienenden Glühstift 21 federnd innerhalb des Glühmodulgehäuses 14 gehalten. Die biegeelastische Membran 60 weist einen glühstiftseitigen, inneren Stützabschnitt 61 und einen gehäuseseitigen, äußeren Stützabschnitt 62 auf. Die biegeelastische Membran 60 ist dabei mit dem inneren Stützabschnitt 61 mittels einer umlaufenden ersten Schweißnaht 63 an einer Außenseite 25 des Glühstifts 21 und mit dem äußeren Stützabschnitt 62 mittels einer einzigen umlaufenden, zweiten Schweißnaht 64 an einer Innenseite 26 des Glühmodulgehäuses 14 befestigt. Die zweite Schweißnaht 64 bildet dabei eine einzige Befestigungsstelle am äußeren Stützabschnitt 62 zur Befestigung des Glüh- und Druckmessmoduls 11 innerhalb des Glühmodulgehäuses 14 aus.

Der Spannhülse 66 verbindet die biegeelastische Membran 60 und das Stützelement 34 innerhalb des Glühmodulgehäuses 14 starr, wobei die Spannhülse 66 einenends an der biegelastischen Membran 60 beispielsweise mittels einer ersten Schweißnaht 67 und anderenends an dem Stützelement 34 beispielsweise mittels einer zweiten Schweißnaht 68 befestigt ist. Dadurch wird der Aufnahmeraum 28 innerhalb der Spannhülse 66 mittels der Membran 60 gegenüber dem Brennraum des Verbrennungsmotors abgedichtet. Als zweckmäßig hat sich herausgestellt, dass zwischen der Außenwand der Spannhülse 66 und der Innenwand des Glühmodulgehäuses 14 ein Ringspalt 69 ausgebildet ist.

Die Spannhülse 66 weist dabei einen Außendurchmesser D2 auf, der geringer ist als der Außendurchmesser D1 des äußeren Stützabschnitts 62, so dass sich der umlaufende Ringspalt 69 zwischen dem Innendurchmessers d1 des Glühmodulgehäuses 14 und dem Außendurchmesser D2 der Spannhülse 66 ergibt.

Mittels der Spannhülse 66 wird der Drucksensor 31 in der Sensoreinheit 30' zwischen dem Übertragungselement 50 und dem Stützelement 34 mittels einer Vorspannung gehalten, wobei die Vorspannung von der Federkraft der biegeelastischen Membran 60 aufgebracht wird. Dadurch entsteht das Glüh- und Druckmessmodul 11 als vormontierbare Montageeinheit, die die Bauteile der Druckmesseinheit 30 und der Glühkerze 20 enthält und die mit dem Sensorkontakt 45 und dem Hochstromkontakt 46 des Elektronikmoduls 12 kontaktiert wird. Anschließend wird das Glühmodulgehäuse 14 über die besagte Montageeinheit geschoben und mit dem Elektronikmodulgehäuse 15 verschweißt. Mittels der einzigen Schweißnaht 64 wird dann das Glüh- und Druckmessmodul 16 durch Verschweißen des äußeren Stützteils 62 der biegeelastischen Membran 60 an der Innenwand 26 des Glühmodulgehäuses 14 mittel einer weiteren Schweißnaht 64 am Glühmodulgehäuse 14 fixiert. Durch diese Fertigungsabfolge wird sichergestellt, dass die Vorspannung für den Drucksensor 31 vor der Endmontage einstellbar ist und durch die weiteren Montageschritt nicht beeinflusst wird.

Der im Brennraum herrschende Druck, der eine Druckkraft auf den als Druckaufnehmer wirkenden Glühstift 21 ausübt, bewirkt, dass aufgrund der biegeelastischen Membran 60 der Glühstift 21 eine axiale Bewegung gegenüber dem Gehäuse 14 entlang der Längsachse ausführt. Die biegeelastische Membran 60 ist mit einer Biegesteifigkeit derart federnd ausgebildet, dass der Glühstift 21 innerhalb des Gehäuses 14 die erforderliche axiale Bewegung ausführen kann, um die auf den Glühstift 21 ausgeübte Druckkraft auf den Drucksensor 31 zu übertragen.

## Patentansprüche

1. Druckmessglühkerze mit einem Gehäuse (13, 14), in dem ein Glühstift (21) zum Zünden eines Verbrennungsgemisches einer Brennkraftmaschine und eine Druckmesseinheit (30) mit einem Drucksensor (31) zur Erfassung eines Brennraumdrucks der Brennkraftmaschine angeordnet sind, wobei der Glühstift (21) einen Glühstromkontakt (23) für ein elektrisches Heizelement (22) aufweist, und wobei am vom Brennraum abgewandten Ende des Glühstifts (21) ein Druckübertragungselement (50) befestigt ist, welches den auf den Glühstift (21) wirkenden Brennraumdruck auf die Druckmesseinheit (30) überträgt, wobei das Druckübertragungselement (50) hülsenförmig ausgeführt ist und glühstiftseitig einen Aufnahmeraum (51) für den Glühstromkontakt (23) des Heizelements (22) ausbildet, in dem der Glühstromkontakt (23) mit einer Glühstromleitung (18) kontaktiert ist, **dadurch gekennzeichnet, dass** das hülsenförmige Druckübertragungselement (50) eine Aussparung (55) aufweist, durch die die Glühstromleitung (18) seitlich aus dem Aufnahmeraums (51) heraus geführt ist; und
dass die Glühstromleitung (18) in axialer Richtung innerhalb der Druckmesseinheit (30) am Drucksensor (31) vorbeigeführt und durch eine in einem Stützelement (34) für den Drucksensor (31) eingebrachte Durchführung (36) zur Kontaktierung mit einem freiliegenden Hochstromkontakt (46) aus der Druckmesseinheit (30) heraus geführt ist.

2. Druckmessglühkerze nach Anspruch 1, **dadurch gekennzeichnet, dass** der freiliegende Hochstromkontakt (46) an einer glühmodulseitigen Stirnseite (43) einer Kontaktiereinheit (4) ausgebildet ist.

3. Druckmessglühkerze nach Anspruch 1, **dadurch gekennzeichnet, dass** am Stützelement (34) mindestens ein weiterer Spalt (35) zur Durchführung von weiteren elektrischen Verbindungen (17) für den Drucksensor (31) ausgebildet ist.

4. Druckmessglühkerze nach Anspruch 1, **dadurch gekennzeichnet, dass** der Drucksensor (31) mit der Federkraft einer biegeelastischen Membran (60) vorgespannt ist, dass die biegeelastische Membran (60) mittels einer Spannhülse (66) mit dem Stützelement (34) und mittels eines äußeren Stützabschnitts (62) am Gehäuse (13, 14) befestigt ist.

5. Druckmessglühkerze nach Anspruch 4 **dadurch gekennzeichnet, dass** die Spannhülse (66) einen Außendurchmesser D2 aufweist, der geringer ist als der Außendurchmesser D1 des äußeren Stützabschnitts (62), so dass sich zwischen einem Innendurchmessers d1 des Gehäuses (14) und dem Außendurchmesser D2 der Spannhülse (66) einen umlaufenden Spalt (69) ergibt.

6. Druckmessglühkerze nach Anspruch 4, durch gekennzeichnet, dass am äußeren Stützabschnitt (62) eine einzige Befestigungsstelle (64) zum Befestigen der Druckmesseinheit (60) im Gehäuse (13, 14) ausgebildet ist.

## Claims

1. Pressure-measuring glow plug having a housing (13, 14) in which a glow plug (21) for ignition of a combustion mixture of an internal combustion engine and a pressure-measuring unit (30) having a pressure sensor (31) for sensing a combustion space pressure of the internal combustion engine are arranged, wherein the glow plug (21) has a glow current contact (23) for an electric heating element (22), and wherein a pressure-transmission element (50), which transmits the combustion space pressure acting on the glow pin (21) to the pressure-measuring unit (30), is attached to the end, facing away from the combustion space, of the glow plug (21), wherein the pressure-transmission element (50) is embodied in a sheath shape and forms on the glow plug side a receptacle space (51) for the glow current contact (23) of the heating element (22) in which the glow current contact (23) makes contact with a glow current line (18), **characterized in that** the sheath-shaped pressure-transmission element (50) has a cut-out (55) through which the glow current line (18) is guided laterally out of the receptacle space (51); and
**in that** the glow current line (18) is led in an axial direction past the pressure sensor (31) within the pressure-measuring unit (30) and is led out from the pressure-measuring unit (30) through a breakthrough (36), formed in a support element (34) for the pressure sensor (31), for making contact with an exposed high-current contact (46).

2. Pressure-measuring glow plug according to Claim 1, **characterized in that** the exposed high-current contact (46) is formed on a glow-module-side end face (43) of a contact-forming unit (4).

3. Pressure-measuring glow plug according to Claim 1, **characterized in that** at least one further gap (35) for leading through further electrical connections (17) for the pressure sensor (31) is formed on the support element (34) .

4. Pressure-measuring glow plug according to Claim 1, **characterized in that** the pressure sensor (31) is prestressed with the spring force of a flexible diaphragm (60), and **in that** the flexible diaphragm (60) is attached to the support element (34) by means of a clamping sleeve (66), and to the housing (13, 14) by means of an outer support section (62).

5. Pressure-measuring glow plug according to Claim 4, **characterized in that** the clamping sleeve (66) has an external diameter D2 which is smaller than the external diameter D1 of the outer support section (62), with the result that a circumferential gap (69) is produced between an internal diameter d1 of the housing (14) and the external diameter D2 of the clamping sleeve (66).

6. Pressure-measuring glow plug according to Claim 4, **characterized in that** a single attachment point (64) for attaching the pressure-measuring unit (60) in the housing (13, 14) is formed on the outer support section (62).

## Revendications

1. Bougie de préchauffage de mesure de pression comprenant un boîtier (13, 14) dans lequel sont disposés un crayon de préchauffage (21) destiné à allumer un mélange de combustion d'un moteur à combustion interne et une unité de mesure de pression (30) pourvue d'un capteur de pression (31) et destinée à détecter une pression de chambre de combustion du moteur à combustion interne, le crayon de préchauffage (21) comportant un contact de courant de préchauffage (23) destiné à un élément chauffant électrique (22), et un élément de transmission de pression (50), qui transmet la pression de chambre de combustion agissant sur le crayon de préchauffage (21) à l'unité de mesure de pression (30), est fixé à l'extrémité du crayon de préchauffage (21) qui est opposée à la chambre de combustion, l'élément de transmission de pression (50) étant conçu en forme de manchon et formant du côté crayon de préchauffage un espace de réception (51) qui est destiné au contact de courant de préchauffage (23) de l'élément chauffant (22) et dans lequel le contact de courant de préchauffage (23) est en contact avec une ligne de courant de préchauffage (18), **caractérisée en ce que** l'élément de transmission de pression (50) en forme de manchon comporte un évidement (55) à travers lequel la ligne de courant de préchauffage (18) est guidée latéralement hors de l'espace de réception (51) ; et **en ce que** la ligne de courant de préchauffage (18) est guidée dans la direction axiale à l'intérieur de l'unité de mesure de pression (30) en passant le capteur de pression (31) et est sortie de l'unité de mesure de pression (30), en étant guidée à travers un passage (36) ménagé dans un élément de support (34) destiné au capteur de pression (31), pour venir en contact avec un contact à courant élevé exposé (46).

2. Bougie de préchauffage de mesure pression selon la revendication 1, **caractérisée en ce que** le contact à courant élevé exposé (46) est formé sur un côté d'extrémité (43), côté module de préchauffage, d'une unité de contact (4).

3. Bougie de préchauffage de mesure de pression selon la revendication 1, **caractérisée en ce qu'**au moins une autre fente (35) est formée au niveau de l'élément de support (34) pour établir d'autres connexions électriques (17) destinées au capteur de pression (31).

4. Bougie de préchauffage de mesure de pression selon la revendication 1, **caractérisée en ce que** le capteur de pression (31) est précontraint par la force élastique d'une membrane (60) élastique en flexion, **en ce que** la membrane (60) élastique en flexion est fixée au boîtier (13, 14) au moyen d'un manchon de serrage (66) pourvu de l'élément de support (34) et au moyen d'une partie de support extérieure (62).

5. Bougie de préchauffage de mesure de pression selon la revendication 4, **caractérisée en ce que** le manchon de serrage (66) a un diamètre extérieur D2 qui est inférieur au diamètre extérieur D1 de la partie de support extérieure (62) de manière à ménager une fente périphérique (69) entre un diamètre intérieur d1 du boîtier (14) et le diamètre extérieur D2 du manchon de serrage (66).

6. Bougie de préchauffage de mesure de pression selon la revendication 4, **caractérisée en ce qu'**un seul point de fixation (64), destiné à fixer l'unité de mesure de pression (60), est formé dans le boîtier (13, 14) au niveau de la partie de support extérieure (62).
